Europäisches Patentamt

European Patent Office

Office européen des brevets

(19)

(11) Veröffentlichungsnummer: **0 215 966**
**B1**

(12) **EUROPÄISCHE PATENTSCHRIFT**

(45) Veröffentlichungstag der Patentschrift:
13.12.89

(21) Anmeldenummer: 85111559.2

(22) Anmeldetag: 12.09.85

(51) Int. Cl.⁴: **F24H 1/00,** F24D 17/00,
F24D 11/02

(54) Wärmerückgewinnungsanlage.

(43) Veröffentlichungstag der Anmeldung:
01.04.87 Patentblatt 87/14

(45) Bekanntmachung des Hinweises auf die Patenterteilung:
13.12.89 Patentblatt 89/50

(84) Benannte Vertragsstaaten:
AT CH DE FR GB IT LI NL SE

(56) Entgegenhaltungen:
DE-A- 2 625 157
DE-A- 3 309 298

PATENT ABSTRACTS OF JAPAN, Band 8,
Nr. 32 (M-275)[1469], 10. Februar 1984

(73) Patentinhaber: Waterkotte, Klemens, Auf dem Rhode 2a,
D-4690 Herne 1(DE)

(72) Erfinder: Waterkotte, Klemens, Auf dem Rhode 2a,
D-4690 Herne 1(DE)

(74) Vertreter: Herrmann-Trentepohl, Werner, Dipl.-Ing. et al,
Postfach 1140 Schaeferstrasse 18, D-4690 Herne 1(DE)

## Beschreibung

Die Erfindung betrifft eine Wärmerückgewinnungsanlage gemäß dem Oberbegriff des Anspruchs 1.

Im Zuge der Rohrstoffverknappung werden in den letzten Jahren immer größere Anstrengungen darauf verwandt, die noch vorhandenen Reserven immer besser zu nutzen. So werden durch Recycling-Maßnahmen Stoffe, die bisher als Abfall abgeschrieben wurden, einer erneuten Verwendung zugeführt. Dieses Recycling findet jedoch nicht in der Wierderaufbereitung von wertvollen Stoffen seine Grenzen. So ist man auch dazu übergegangen, mit den Energiereserven sparsamer umzugehen. Durch die erheblich verbesserten Wärmepumpen ist es möglich geworden, bisher nicht genutzte Wärmequellen, wie z.B. die Erdwärme zur Heizung von z.B. Wohn- und Büroräumen heranzuziehen. Auch zur Erzeugung von warmem Brauchwasser sind diese Anlagen geeignet. Umgekehrt fällt in den Haushalten und im großen Rahmen auch in der Industrie warmes Wasser an, das in früheren Jahren ungenutzt in die Kanalisation geleitet wurde. Es lag nahe, nach Verfahren zu suchen, wie diese an sich verlorene Energie wenigstens zum Teil zurückgewonnen werden konnte. Ein weiterer Grund, diesem Abwasser die Wärme zu entziehen ist darin zu sehen, daß das warme Abwasser unsere Flüsse und Seen zu sehr belastet, die sich aufheizen und somit der Lebensraum von einigen Tieren und Pflanzen immer kleiner wird, während andere sich unkontrolliert vermehren.

In der DE-OS 26 25 157 ist eine Anlage zur Wärmerückgewinnung aus Abwasser beschrieben, bei der zwischen einem Abwasserkanal und einer zentralen Abwasserleitung ein Sammelbehälter eingeschaltet ist. In dem Auslauf dieses Behälters ist ein Absperrschieber angeordnet, der mit einem Temperaturfühler verbunden ist. Bei einer festgelegten Temperatur des Abwassers wird der Auslauf abgesperrt. Im Behälter ist ein Wärmetauscher angeordnet, der mit einem oder mehreren Speicherbehältern in Verbindung steht, die Warmwasserverbrauchern bzw. -bereitern vorgeschaltet sind. Für den Fall, daß die Speicherbehälter einer Raumheizung vorgeschaltet sind, schlägt die Druckschrift vor, die Wassertemperatur in den Speichern mittels einer Wärmepumpe anzuheben.

Der Aufbau einer derartigen Anlage ist jedoch kompliziert und aufwendig. Trotzdem ist der Wirkungsgrad eher gering, da der Wärmetauscher direkt mit dem abzukühlenden Medium beaufschlagt wird, was bekanntlich einen nicht sehr guten Wärmeübergang zur Folge hat.

Der Erfindung liegt daher die Aufgabe zugrunde, eine Wärmerückgewinnungsanlage der eingangs genannten Art so auszubilden, daß trotz einfachem Aufbau ein größerer Wärmeübergangsfaktor und damit ein besserer Wirkungsgrad erreicht wird.

Die Erfindung löst diese Aufgabe mit Hilfe der Merkmale des Anspruchs 1. Weitere vorteilhafte Ausgestaltungen der Erfindung sind Gegenstand der Unteransprüche.

Bei der erfindungsgemäßen Anlage sorgt eine Vakuumpumpe für einen Unterdruck im Behälter. Bei geöffnetem Motoventil strömt das warme Abwasser über den Stufenfilter in den Behälter, bis der Flüssigkeitsspiegel den oberen Schalter erreicht hat. Dieser schließt das Motoventil. Da die Flüssigkeit in einen evakuierten Raum eintritt, befindet sich der Inhalt des Gefäßes im Sattdampfzustand. Wird nun die Wärmepumpe eingeschaltet, kühlt sich der Verdampfer ab. Der gesättigte Dampf schlägt sich am Verdampfer ab und kondensiert. Der Wärmeübergang von kondensierendem Dampf auf die Oberfläche des Verdampfers ist besonders günstig. So liegt der Wärmeübergangskoeffizient von kondensiertem Wasserdampf auf eine Metallwand bei $\alpha$ = 10.500 kW/m²/K während er bei siedendem Wasser lediglich bei $\alpha$ = 3.500 bis 5.834 und bei ruhendem Wasser bei nur $\alpha$ = 350 bis 584 liegt. Der Verdampfer kann als Glattrohrschlange, Rippenrohrschlange oder als Lamellenkühler ausgebildet sein. Durch die Abgabe an Wärme an den Verdampfer kühlt sich die im Behälter befindliche Flüssigkeit ab. Wird eine bestimmte Temperatur unterschritten, wird die Pumpe eingeschaltet und Flüssigkeit aus dem Behälter abgepumpt, bis der Flüssigkeitsspiegel den unteren Schwimmerschalter erreicht. Dieser schaltet die Pumpe ab und öffnet das Motoventil, so daß neues Abwasser nachströmen kann. Ist bei Erreichen des oberen Schwimmerschalters die Solltemperatur noch nicht erreicht, wird wieder die Pumpe eingeschaltet, bis das Niveau des unteren Schalters erreicht ist und über das nun wieder öffnende Ventil Abwasser nachströmen kann. Die Wärmepumpe ist dem Wärmeverbraucher bzw. -bereiter direkt vorgeschaltet. Durch die erfindungsgemäße Bauweise ist es möglich, auf die vorbekannte komplizierte Steuerung und die Zwischenschaltung von Speicherbehältern zu verzichten, da der erfindungsgemäße Behälter sowohl die Aufgabe des Sammel- als auch des Speicherbehälters übernimmt.

Wenn, wie Anspruch 2 vorschlägt, die Zuführung des Abwassers als Ringleitung ausgebildet ist, deren Öffnungen oberhalb des oberen Schalters angeordnet sind und in Richtung schräg nach unten auf die Innenwand des Behälters weisen, ist es möglich, die Innenwand durch das Abwasser abzuspülen, so daß sich Verkustungen durch noch in dem Abwasser enthaltene Verunreinigungen vermeiden lassen.

Um beim Einströmen des Abwassers eine zu große Schaumbildung zu verhindern, bzw. zu vermeiden, daß der Schaum mit dem Verdampfer in Berührung kommt, was den Wärmeübergangsfaktor verringern würde, ist zwischen oberem Schalter und dem Verdampfer ein Schaumbrecher angeordnet. Dieser Schaumbrecher verhindert ferner auch das Mitreißen von Flüssigkeitspartikeln, die ebenfalls den Wärmeübertragungsfaktor ungünstig beeinflussen würden. Solche Schaumbrecher können z.B. aus übereinander angeordneten Drahtgewebematten bestehen.

Nach Anspruch 4 ist die Pumpe über eine Leitung mit dem Filter verbunden. Die abgepumpte Flüssigkeit spült somit den vom einfließenden Wasser verschmutzten Filter. Um die abgepumpte Flüssigkeitsmenge regulieren zu können, befindet sich hinter der Pumpe ein Drosselventil.

Zur Kontrolle der Füllhöhe ist in der Behälterwand gemäß Anspruch 5 ein Schauglas vorgesehen. Für Wartungs- und Inspektionsarbeiten im Behälter verfügt dieser über ein verschließbares Mannloch.

Gemäß Anspruch 6 ist im Behälter unterhalb des Verdampfers eine Tropfenauffangwanne angeordnet, die über eine Vakuumschleuse mit einem außerhalb des Behälters angeordneten Sammelbehälter verbunden ist. Hierdurch ist es möglich, das relativ saubere Kondensat aufzufangen und es eventuell Analysen zuzuführen, da sich im Kondensat leicht siedende Bestandteile wie Benzin oder Alkohol anreichern.

Zum Schutz der Vakuumpumpe ist in der Absaugleitung vom Behälter zur Vakuumpumpe eine Kühlfalle vorgesehen, die dafür sorgt, daß die Pumpe nicht unnötig durch das Ansaugen von Sattdampf belastet wird. Dieser Schutz ist insbesondere wichtig, wenn die Vakuumpumpe auf Dauerlauf geschaltet ist. Es ist jedoch auch vorstellbar, besonders bei größeren Anlagen, eine Steuerung des Vakuums durch einen Pressostaten vorzusehen, so daß die Pumpe nur zeitweise in Betrieb gesetzt zu werden braucht.

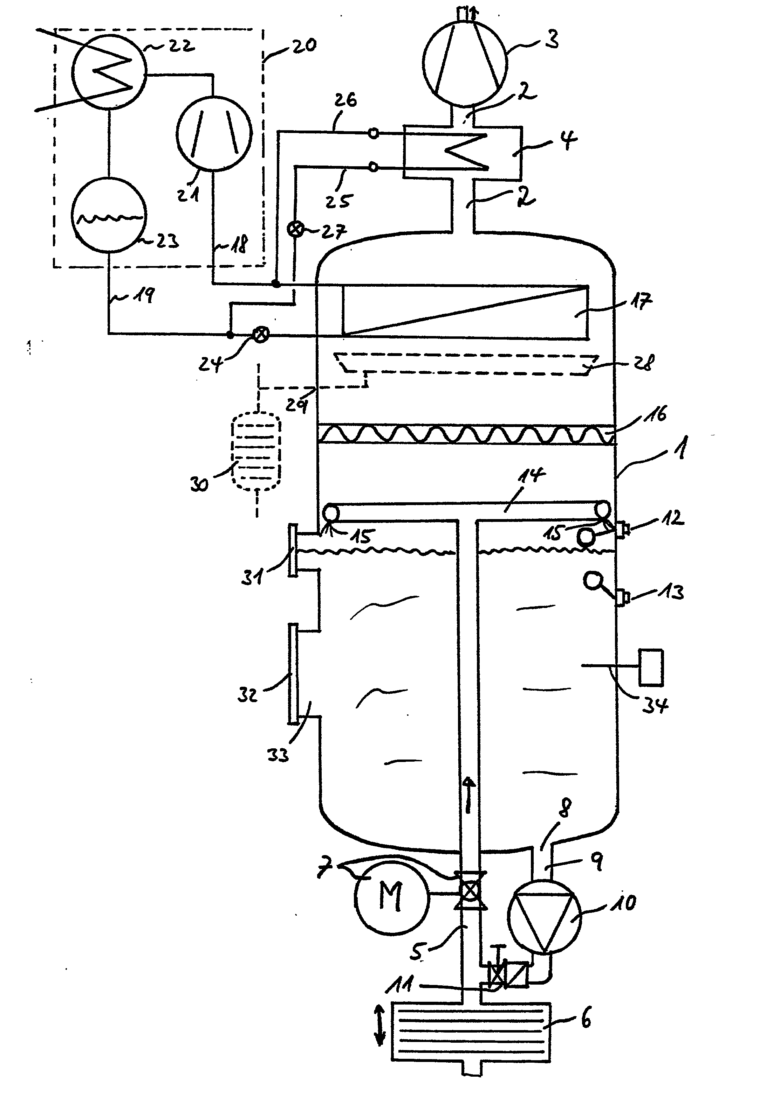

Im folgenden wird eine Ausführungsform der Erfindung anhand einer Zeichnung dargestellt und erläutert. Die in der Zeichnung dargestellte Wärmerückgewinnungsanlage weist einen Behälter 1 auf, der an seiner Oberseite durch eine Leitung 2 mit einer Vakuumpumpe 3 verbunden ist. Zwischen Behälter 1 und Vakuumpume 3 ist in der Leitung 2 eine Kühlfalle 4 angeordnet. In die Unterseite des Behälters 1 mündet eine Leitung 5, die zur Zuführung des abwärmeführenden Abwassers in den Behälter dient. In die Leitung 5 ist außerhalb des Behälters 1 ein Stufenfilter 6 und zwischen Stufenfilter 6 und Behälter 1 ein Motorventil 7 eingebaut. Die Unterseite des Behälters 1 verfügt über eine weitere Öffnung 8, von der eine Leitung 9 ausgeht, die zu einer Pumpe 10 führt und von der Pumpe 10 zur Leitung 5, wo sie zwischen dem Motor ventil 7 und dem Stufenfilter 6 mündet. Vor der Mündung befindet sich in der Leitung 9 ein Drosselventil 11. Etwa in der mittleren Höhe des Behälters 1 sind in gewissem Abstand voneinander ein oberer Schwimmerschalter 12 und ein unterer Schwimmerschalter 13 in der Wand des Behälter 1 angeordnet. Die Leitung 5 steigt im Behälter 1 bis auf eine Höhe an, die oberhalb des Schalters 12 liegt. Dort mündet die Leitung 5 in eine Ringleitung 14, die horizontal an der Innenwand des Behälters 1 entlanggeführt ist. Die Ringleitung 14 weist mehrere Öffnungen 15 auf, die nach unten auf die Behälterinnenwand gerichtet sind. Oberhalb der Ringleitung 14 ist über dem gesamten Querschnitt des Behälter 1 horizontal ein Schaumbrecher 16 angeordnet, der z.B. aus übereinander angeordneten Drahtgewebematten bestehen kann.

Im oberen Bereich des Behälters 1 befindet sich ein Verdampfer 17, der aus einer Glattrohrschlange, einer Rippenrohrschlange bestehen aber auch als Lamellenkühler ausgebildet sein kann. Der Verdampfer 17 ist mit Hilfe von Leitungen 18 und 19 in einem Kreislauf mit einer Wärmepumpe 20 verbunden. Die Wärmepumpe 20 kann z.B. als Kompressions- oder Absorptionswärmepumpe ausgebildet sein, aber auch andere Arten sind möglich, im Fall einer Kompressionswärmepumpe besteht sie aus einem Kompressor 21, einem Kondensator 22 und einem Kältemittelsammler 23, die in Strömungsrichtung des vom Verdampfer 17 kommenden, in den Leitungen 18 und 19 strömenden Kältemittels hintereinander angeordnet sind. Die Strömung des Kältemittels kann mit Hilfe des Ventils 24 unter brochen werden. Die Kühlfalle 4 ist ebenfalls mit der Wärmepumpe 20 verbunden und zwar über die Leitungen 25 und 26, wobei die Leitung 25 ebenfalls über ein Ventil 27 absperrbar ist. Unterhalb des Verdampfer 17 ist eine Tropfenauffangwanne 28 angeordnet, die über eine Vakuumschleuse 29 mit einem Sammelbehälter 30 außerhalb des Behälters 1 verbunden ist (gestrichelt gezeichnet). In Höhe der Schalter 12 und 13 ist in der Wandung des Behälters 1 ein Schauglas 31 angeordnet und darunter ein mit einem Deckel 32 verschließbares Mannloch 33. Unterhalb des Schalters 13 ist in der Gehäusewand ein Temperaturfühler 34 angeordnet, der in die Abwasserflüssigkeit hineinreicht. Der Temperaturfühler 34 ist elektrisch mit der Pumpe 10 verbunden. Der Schalter 12 ist elektrisch mit dem Motorventil 7, und der Schalter 13 ist elektrisch sowohl mit dem Motorventil 7 als auch mit der Pumpe 10 verbunden. Die elektrischen Verbindungen sind der besseren Übersichtlichkeit der Zeichnung wegen nicht dargestellt. Die Schalter 12 und 13 sind dabei so ausgebildet, daß der Schalter 12 bei steigendem Flüssigkeitsspiegel mit aufschwimmt und bei Erreichen einer bestimmten Höhe ausschaltet. Der Schalter 13 schaltet bei sinkendem Flüssigkeitsspiegel ab, wenn der in der Flüssigkeit befindliche Auftriebskörper des Schalterarmes eine bestimmte Höhe erreicht.

Im folgenden wird die Arbeitsweise der Anlage beschrieben:

Über den Filter 6 und das geöffnete Motorventil 7 wird die abwärmeführende Flüssigkeit durch die Leitung 5 in die Ringleitung 14 geleitet. Über die Öffnungen 15 verläßt sie die Ringleitung 14 und strömt an der Innenwand des Behälters 1 herab, in dem mit Hilfe der Vakuumpumpe 3 ein Vakuum hergestellt wurde. Der Raum oberhalb des hochsteigenden Flüssigkeitsspiegels ist somit im Sattdampfzustand. Durch den Schaumbrecher 16 wird der beim Ausströmvorgang der Flüssigkeit sich bildende Schaum daran gehindert, bis zum Verdampfer 17 hochzusteigen, ebenso wie etwaige Flüssigkeitsteilchen. Die dampfförmige Phase trifft auf den Verdampfer 17, der sich durch Betätigung der Wärmepumpe 20 abgekühlt hat, schlägt sich dort nieder und kondensiert. Dadurch wird das im Verdampfer-Wärmepumpenkreislauf strömende Kältemittel erwärmt und zur Wärmepumpe 20 transportiert, welche die Wärme zum Aufheizen von z.B. Brauchwasser einsetzt. Der Flüssigkeit im Behälter 1 wird mehr und mehr Wärme entzogen und sie kühlt sich ab. Erreicht die Temperatur einen bestimmten unteren Wert, wird die Pumpe 10 eingeschaltet, die Flüssigkeit aus dem Behälter 1 abzieht, welche zwecks Spülung durch den Filter 6 abgelassen wird. Erreicht der Flüssigkeitsspiegel das Niveau des Schalters 13, wird die Pumpe 10 abgeschaltet und das Motorventil 7 eingeschaltet. Abwärmeführendes Abwasser strömt über die Ringleitung 14 in den Behälter, bis das Niveau den Schalter 12 erreicht hat. Das Motorventil 7 wird geschlossen. Liegt die Temperatur in der Flüssigkeit immer noch zu niedrig, wird wieder die Pumpe 10 eingeschaltet und so fort.

Das vom Verdampfer 17 abtropfende Destillat kann in der Wanne 28 aufgefangen werden, durch die Vakuumschleuse 29 zum Sammelbehälter 30 geleitet und dort untersucht werden.

**Patentansprüche**

1. Wärmerückgewinnungsanlage für abwärmeführende Flüssigkeiten, insbesondere Abwässer, wobei die Flüssigkeit in einen mit einem Temperaturfühler (34) versehenen Behälter (1) geleitet wird, in dem ein Wärmetauscher (17) angeordnet ist, welcher mit einer Wärmepumpe (20) verbunden ist, dadurch gekennzeichnet, daß der Behälter (1) über eine Vakuumpumpe (3) evakuierbar ist, daß die Flüssigkeit über einen Filter (6) und ein motorbetriebenes Ventil (7) über eine Leitung (5) in den Behälter (1) einleitbar ist, in dem übereinander zwei Schwimmerschalter (12, 13) angeordnet sind, von denen der obere (12) zum Schließen und der untere (13) zum Öffnen des Ventils (7) dient, daß der im Behälter (1) angeordnete Fühler (34) zur Messung der Temperatur der Flüssigkeit elektrisch mit einer Pumpe (10) verbunden ist, die zur Absenkung des Flüssigkeitsspiegels im Behälter (1) dient und die durch den unteren Schalter (13) abschaltbar ist und daß der Wärmetauscher (17) ein oberhalb des oberen Schalters (12) angeordneter Verdampfer ist, welcher über Kühlmittelleitungen (18, 19) mit der Wärmepumpe (20) verbunden ist.

2. Wärmerückgewinnungsanlage nach Anspruch 1, dadurch gekennzeichnet, daß die Leitung (5) für die Flüssigkeit ein bis über die Höhe des oberen Schalters (12) hinausreichendes Rohr ist, welches mit seinem oberen Ende an eine um die Behälterinnenwand herumgeführte Ringleitung (14) angeschlossen ist, die über Öffnungen (15) verfügt, welche schräg nach unten auf die Behälterinnenwand gerichtet sind.

3. Wärmerückgewinnungsanlage nach Anspruch 1 oder 2, dadurch gekennzeichnet, daß zwischen Verdampfer (17) und dem oberen Schalter (l2) ein Schaumbrecher in Form von übereinander angeordneten Drahtgewebematten vorgesehen ist.

4. Wärmerückgewinnungsanlage nach einem der Ansprüche 1 bis 3, dadurch gekennzeichnet, daß die Pumpe (10) über eine Leitung (9, 5) mit dem Filter (6) verbunden ist und zwischen Pumpe (10) und Filter (6) ein Drosselventil (11) angeordnet ist.

5. Wärmerückgewinnungsanlage nach einem der Ansprüche 1 bis 4, dadurch gekennzeichnet, daß in der Behälterwand ein Schauglas (31) sowie ein mit einem Deckel (32) verschließbares Mannloch (33) vorgesehen ist.

6. Wärmerückgewinnungsanlage nach einem der Ansprüche 1 bis 5, dadurch gekennzeichnet, daß im Behälter (1) zwischen dem oberen Schalter (12) und dem Verdampfer (17) eine Tropfenauffangwanne (28) angeordnet ist, die über eine Vakuumschleuse (29) mit einem außerhalb des Behälters (1) angeordneten Sammelbehälter (30) verbunden ist.

7. Wärmerückgewinnungsanlage nach einem der Ansprüche 1 bis 6, dadurch gekennzeichnet, daß in der Leitung (2) zwischen Vakuumpumpe (3) und Behälter (1) eine Kühlfalle (4) angeordnet ist, die über Leitungen (25, 26) mit der Wärmepumpe (20) verbunden ist.

8. Wärmerückgewinnungsanlage nach einem der Ansprüche 1 bis 7, dadurch gekennzeichnet, daß das Vakuum mittels eines Pressostaten regelbar ist.

**Claims**

1. A waste heat recovery installation for waste heat conducting liquids such as sewerage, whereby the liquid is conducted to a container (1) provided with a temperature sensor (34), in which a heat exchanger (17) is arranged which is connected to a heat pump (20), characterized in that the container (1) can be evacuated by means of a vacuum pump (3), that the liquid can be introduced through a pipe (5) by way of a filter (6) and a motor-driven valve (7) over a pipe (5) into the container (1) in which two floating switches (12, 13) are arranged one above the other, of which the upper switch (12) serves for closing and the lower switch (13) for opening the valve (7), that the sensor (34) arranged in the container (1) for measuring the temperature of the liquid is electrically connected to a pump (10) which serves for lowering the liquid level in the container (1) and which can be switched by means of the lower switch (13), and that the heat exchanger (17) is a vaporizer arranged above the upper switch (12) which is connected by way of pipes containing coolant (18, 19) to the heat pump (20).

2. A waste heat recovery installation according to claim 1, characterized in that the pipe (5) for the liquid is a tube projecting above the height of the upper switch (12) which is connected by its upper end to a closed circular pipe (14) which extends around the inner wall of the container, which is provided with apertures (15) which are inclined downwardly towards the inner wall of the container.

3. A waste heat recovery installation according to claim 1 or 2, characterized in that between the vaporizer (17) and the upper switch (12) there is provided a foam breaker in the form of wire grid mats arranged on top of one another.

4. A waste heat recovery installation according to one of claims 1 to 3, characterized in that the pump (10) is connected to the filter (6) by way of a pipe (9, 5) and a regulating valve is arranged between the pump (10) and the filter (6).

5. A waste heat recovery installation according to one of claims 1 to 4, characterized in that a viewing glass (31) is provided in the wall of the container such as a manhole (33) which can be closed by a cover (32).

6. A waste heat recovery installation according to one of claims 1 to 5, characterized in that a droplet collecting trough (28) is arranged in the container (1) between the upper switch (12) and the vaporizer (17), which is connected via a vacuum sluice (29) to a storage tank (30) arranged outside the container (1).

7. A waste heat recovery installation according to one of claims 1 to 6, characterized in that in the pipe (2) between the vacuum pump (3) and the container (1) a condensation trap (4) is arranged which is connected by way of pipes (25, 26) to the heat pump (20).

8. A waste heat recovery installation according to one of claims 1 to 7, characterized in that the vacuum is controllable by means of a push button.

**Revendications**

1. Système de récupération de chaleur pour traiter des liquides apportant de la chaleur, tels que des eaux résiduaires, comportant un réservoir (1) pourvu d'un capteur de température (34) et dans lequel on fait arriver le liquide à traiter, ce réservoir contenant un échangeur de chaleur (17) relié à une pompe de chaleur (20), caractérisé en ce qu'on fait le vide dans le réservoir (1) au moyen d'une pompe à vide (3); en ce qu'on fait entrer le liquide dans le réservoir (1) à travers un filtre (6) et une vanne à moteur (7) par une canalisation (5); le réservoir (1) étant pourvu en outre de deux contacteurs à flotteurs (12, 13) disposés l'un au-dessus de l'autre, dont un contacteur supérieur (12) prévu pour commander la manœuvre de fermeture de la vanne (7), et un contacteur inférieur (13) pour commander la manœuvre d'ouverture de la vanne (7) ; en ce que le capteur de température (34) prévu dans le réservoir (1) pour y mesurer la température du liquide est relié électriquement à une pompe (10), qui sert à faire baisser le niveau du liquide dans le réservoir (1) et qui peut être commandée à l'arrêt par le contacteur inférieur (13) ; et en ce que l'échangeur de chaleur (17) est constitué par un évaporateur, disposé au-dessus du contacteur supérieur (12) et relié à la pompe de chaleur (20) par des canalisations (18, 19) où peut circuler un fluide de refroidissement.

2. Système de récupération de chaleur conforme à la revendication 1, caractérisé en ce que la canalisation (5) prévue pour l'arrivés du liquide est constituée par un tube qui pénètre dans le réservoir jusque au-dessus de la hauteur du contacteur supérieur (12), l'extrémité supérieure de ce tube d'entrée étant raccordée à une couronne de distribution (14), disposée en regard de la face interne de la paroi du réservoir (1) et pourvue d'orifices (15) qui débouchent obliquement vers le bas en direction de la face interne de la paroi du réservoir.

3. Système de récupération de chaleur conforme à l'une des revendications 1 ou 2, cararactérisé en ce qu'il comporte, entre l'évaporateur (17) et le contacteur supérieur (12), un dispositif anti-mousse constitué par des couches superposées de tissus de fil métallique.

4. Système de récupération de chaleur conforme à l'une des revendications 1 à 3, caractérisé en ce que la pompe (10) est reliée au filtre (6) par une canalisation (9, 5), et en ce qu'une vanne d'étranglement (11) est disposée entre la pompe (10) et le filtre (6).

5. Système de récupération de chaleur conforme à une des revendications 1 à 4, caractérisé en ce que la paroi du réservoir est pourvue d'un hublot d'observation (31) et d'un trou d'homme (33) pouvant être obturé par un couvercle (32).

6. Système de récupération de chaleur conforme à l'une des revendications 1 à 5, caractérisé en ce qu'il comporte une cuve de recueil (28), disposée dans le réservoir (1) entre le contacteur supérieur (12) et l'évaporateur (17) pour recueillir les gouttes de liquide condensé, cette cuve de recueil (28) étant reliée à travers un sas à vide (29) à un réservoir collecteur (30) disposé en dehors du réservoir (1).

7. Système de récupération de chaleur conforme à l'une des revendications 1 à 6, caractérisé en ce qu'il comporte un piège à froid (4) disposé sur la canalisation (2) entre la pompe à vide (3) et le réservoir (1), ce piège à vide (4) étant relié à la pompe de chaleur (20) par des canalisations (25, 26).

8. Système de récupération de chaleur conforme à l'une des revendications 1 à 7, caractérisé en ce que le vide peut être régulé au moyen d'un pressostat.